# EUROPEAN PATENT SPECIFICATION

(11) **EP 3 370 142 B1**
(45) Date of publication and mention of the grant of the patent: **06.04.2022**
(21) Application number: 18159027.4
(22) Date of filing: 27.02.2018
(51) Int. Cl.: G06F 3/12, G06F 16/2455, G06F 40/263

(54) **AUTOMATIC PRINTING LANGUAGE DETECTION ALGORITHM**
ALGORITHMUS FÜR AUTOMATISCHE DRUCKERSPRACHENERKENNUNG
ALGORITHME DE DÉTECTION DE LANGAGE D'IMPRESSION AUTOMATIQUE

(30) Priority: 01.03.2017 US 201715446040
(43) Date of publication of application: 05.09.2018
(73) Proprietor: Datamax-O'Neil Corporation, Orlando, FL 32808 (US)
(72) Inventor: YE RU KOH, Rudy, Morris Plains, NJ New Jersey 07950 (US)
(74) Representative: Haseltine Lake Kempner LLP

(56) References cited:
- US-A1- 2005 068 574

## Description

### FIELD OF THE INVENTION

The present invention relates to a method for automatic printing language sensing.

### BACKGROUND

Generally speaking, a large variety of printing languages is currently available on the market, and each of those languages has to be supported in a fast and convenient way. Moreover, more than one printing language may be used at the same time. To support different printing languages, which may have similar or different syntax patterns, an efficient language detection algorithm is needed.

Standard algorithms of language detection lack symbol recognition flexibility. For example, U.S. Pat. No. 8,218,187 by Ferlitsch discloses a method for automatic language switching for an imaging device, but does not, however, let the user configure the detection algorithm, e.g. by adjusting nodes of the decision tree. U.S. Pat. No. 5,293,466 by Bringmann discloses a printer capable of interpreting print jobs in different printing languages by using a tree of weighted pattern vectors. Although the reference discloses an option for the user to provide additional attributes to improve the accuracy of detection, it does not provide an option for configuring each node of the algorithm with different logics and checks. In U.S. Pat. No. 5,960,113 by Even et al. , an automatic language recognition method is disclosed. The method searches for languages in a predetermined sequential order, and no decision tree algorithm with configurable nodes is involved. Additionally, although the reference offers restarting language recognition process based on detection of a syntax error, it does not offer restarting the process based on end of print job command. Japanese Pat. No. 08,331,306 by Toshihiro discloses a printer that receives commands from a host computer for selecting a printer language and analyzing the print data to form an image, but does not offer an option for restarting the print language detection program if the input data stream has not been detected for a predetermined time period. The Datamax E-Class Printers Operator's Manual discloses a method of autosensing with a predetermined timeout, but does not offer autosensing and language detection at the end of a current data stream. U.S. Pat. No. 5,555,435 by Campbell et al. discloses a method of identifying the end of job boundary and accordingly identifying the language of next printer language, starting with determining if each sample of input data has the same language as the current language. US2005/068574 discloses systems and methods for accurately recognizing a language format of an input imaging data stream when no explicit language switch is present. A sniffer process is initiated when an imaging device receives an input imaging data stream. The sniffer process analyzes an initial sample of the input stream to determine the language format by enumerating through a set of language recognizers that are implemented as callback functions. The enumeration uses a dynamic heuristic approach to selecting the order in which to try the language recognizers. Each language recognizer has a sample size associated with it. For each language recognizer enumerated, the sniffer process pre-reads the associated sample size and invokes the associated callback function with the byte sample. The enumeration continues until a language recognizer acknowledges recognition of the language format or the set of language recognizers is exhausted.

Therefore, a need exists for a flexible automatic language detection algorithm, capable of supporting a variety of printing languages, by applying a decision function on each node of a decision tree.

### SUMMARY

Accordingly, the present invention is directed to a method for automatic printing language sensing, comprising: storing a table defining a set of predetermined printing symbols corresponding to a plurality of printing languages, wherein the definition for each predetermined printing symbol comprises a decision tree data structure used for language sensing and having plurality of nodes, and wherein each node is either a decision function or a null value; receiving a data sample having a plurality of printing symbols corresponding to a syntax pattern specific for a printing language; detecting a printing language of the data sample by: identifying a first printing symbol of the plurality of printing symbols from the data sample, and detecting a correspondence between the first printing symbol of the plurality of printing symbols and a first predetermined printing symbol of the set of predetermined printing symbols defined in the table; responsive to detecting the correspondence between the first printing symbol of the plurality of printing symbols and the first predetermined printing symbol, applying a applying a decision tree algorithm based on the decision tree data structure defined for the first predetermined printing symbol to detect a printing language of the data sample; and repeating the identification, the detection and the application with a second printing symbol of the plurality of printing symbols in the data sample and a second predetermined printing symbol of the set of predetermined printing symbols defined in the table.

### BRIEF DESCRIPTION OF THE DRAWINGS

Figure 1 schematically depicts a method for printing language detection, not according to the present invention.
Figure 2 schematically depicts a method for automatic language sensing, according to an embodiment of the present invention.
Figure 3 schematically depicts a method for pattern identification, not according to the present invention.
Figure 4A schematically depicts a decision tree algorithm used in a method for automatic language sensing, according to an embodiment of the present invention.
Figure 4B schematically depicts a language detection process using a decision tree algorithm used in a method for automatic language sensing, according to an embodiment of the present invention.
Figures 5A-5F schematically depict implementation examples of an algorithm for language detection used in a method for automatic language sensing, according to embodiments of the present invention.

### DETAILED DESCRIPTION

The present invention embraces methods for automatic language detection.

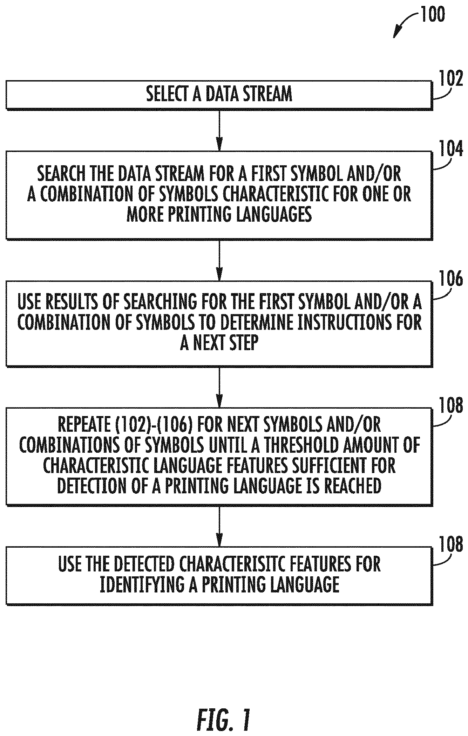

Figure 1 shows a method 100 for printing language detection. At 102, a data stream is selected. At 104, the data stream is searched for a first symbol and/or a combination of symbols characteristic for one or more printing languages. At 106, results of searching are used for the first symbol and/or a combination of symbols to determine instructions for a next step. At 108, 102-106 are repeated for next symbols and/or combinations of symbols until a threshold amount of characteristic language features sufficient for detection of a printing language is reached. And at 110, the detected characteristic features are used for identifying a printing language.

Searching the data stream, 108, can further include using one or more additional configurations input by an end-user and/or by a developer. The method 100 can further include searching for two or more symbols and/or combinations of symbols, each characteristic for a particular language, simultaneously. Searching for a combination of symbols can include searching for a printing command.

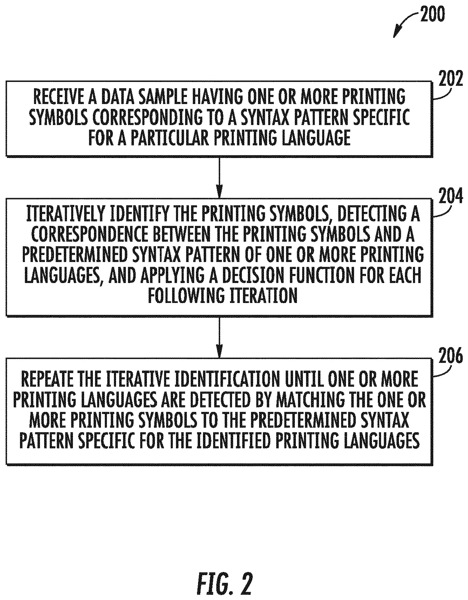

Figure 2 shows a method 200 for automatic language sensing. At 202, a data sample having one or more printing symbols corresponding to a syntax pattern specific for a particular printing language is received. At 204, the printing symbols are iteratively identified, a correspondence between the printing symbols and a predetermined syntax pattern of one or more printing languages is detected, and a decision function is applied for each following iteration. And at 206, the iterative identification is repeated until one or more printing languages are detected by matching the one or more printing symbols to the predetermined syntax pattern specific for the identified printing languages.

The method 200 can include detecting an end of the data sample. The method 200 can further include restarting the language sensing after the end of the data sample is reached. Additionally, the method 200 can include restarting the language sensing when a predetermined timeout threshold is reached, and/or when an error is detected. The method 200 can include storing a selection of the predetermined syntax patterns in an external database, and/or in a memory of a device configured for automatic language sensing.

The method 200 can include parsing the one or more detected printing languages. Additionally, the language sensing can be restarted after the parsing is finished. For example, the parsing can be finished after satisfying one or more language-specific conditions.

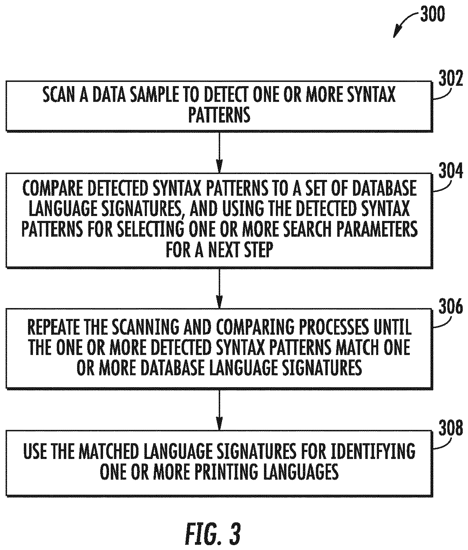

Figure 3 shows a method 300 for pattern identification. At 302, a data sample is scanned to detect one or more syntax patterns. At 304, detected syntax patterns are compared to a set of database language signatures, and used for selecting one or more search parameters for a next step. At 306, the scanning and comparing processes are repeated until the one or more detected syntax patterns match one or more database language signatures. And at 308, the matched language signatures are used for identifying one or more printing languages.

The method 300 can include decoding the detected syntax patterns, and/or searching for additional printing attributes. Scanning a data sample, 302, can be performed in a predetermined order, starting with uniquely identifiable and/or most likely to occur syntax patterns, and proceeding to less identifiable and/or less likely patterns. Additionally, scanning a data sample, 302, can include scanning a data sample for syntax patterns specific to EPL and/or ZPL first.

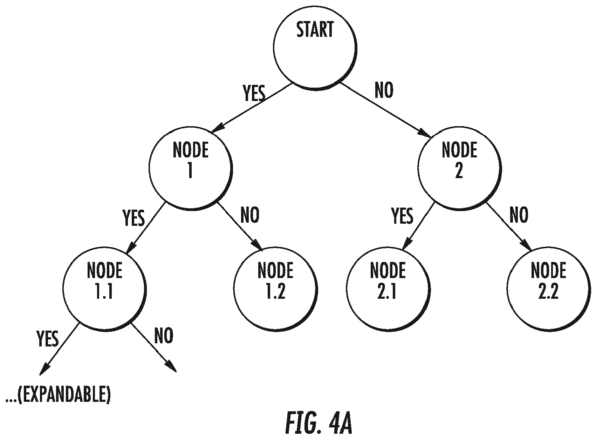

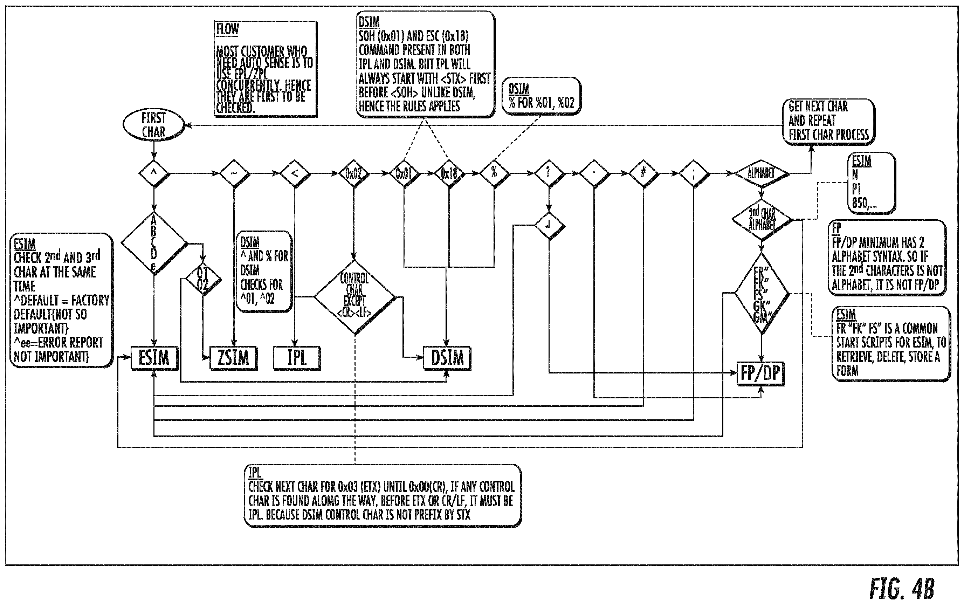

Figure 4A shows a decision tree algorithm. A decision function can be applied on each node of the tree. Figure 4B shows an example of applying a decision tree algorithm for language detection. The flow of the diagram is based on an exemplary assumption that EPL/ZPL languages can be used concurrently, and hence should be checked first. SOH (0x01) command can be present in both IPL and DSIM languages; differentiation between these languages can be made based on the fact that, unlike DSIM, IPL will start with <STX> preceding <SOH>. Additionally, ^(caret) and % (percent) symbols will not function for DSIM if the printer input mode is set to "auto". To detect ESIM, once can check the second and third characters simultaneously. Additionally, it is common for ESIM to start with FR", FK", and FS" scripts, which can be also used for detecting ESIM. FP/DP language will have at least two alphabet symbols; consequently, if the second detected character is not an alphabet symbol, FP/DP language can be ruled out.

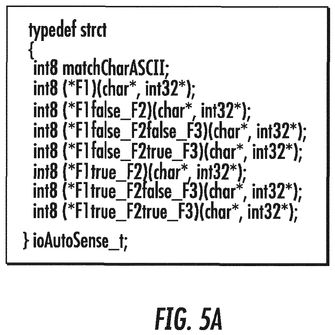

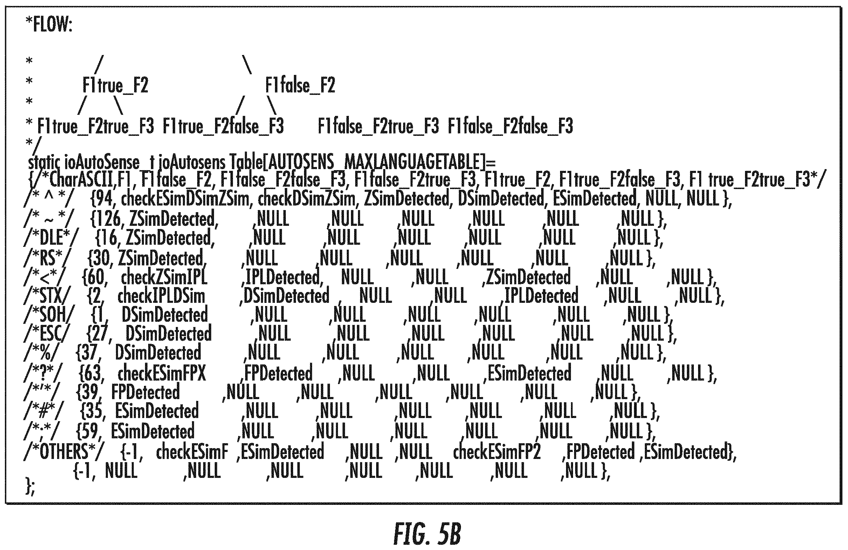

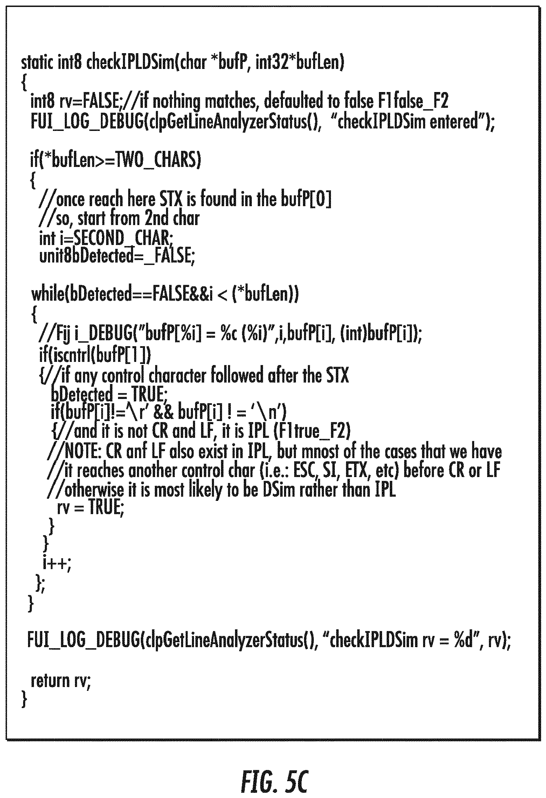

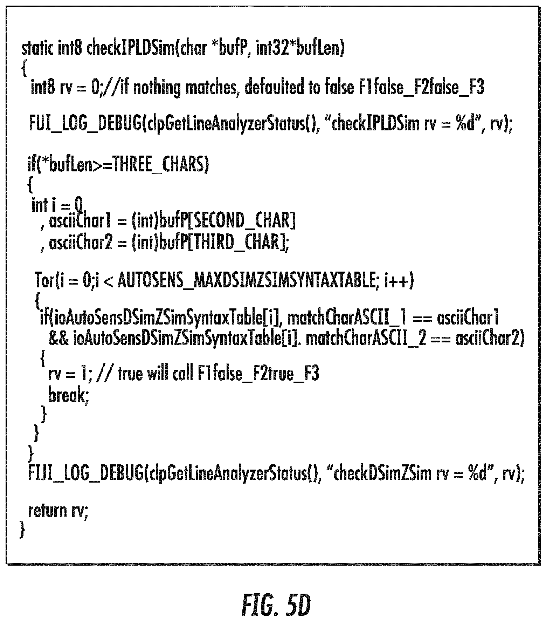

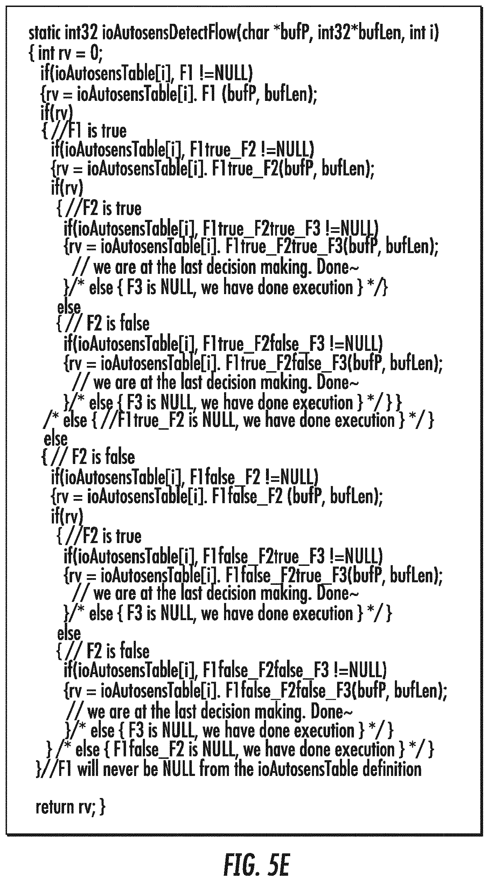

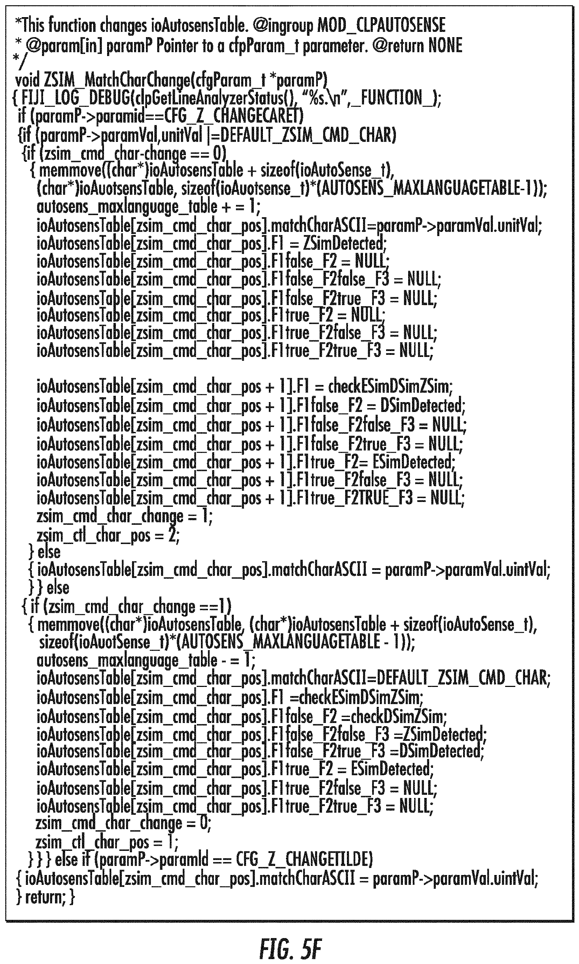

Figures 5A-5F show implementation examples of an algorithm for language detection. The examples are provided in C programming language. Figure 5A shows that each node can be defined as a function pointer, where F1, F1false_F2, F1true_F2, etc. correspond to function names. Figure 5B shows a table defining all the nodes. Figures 5C and 5E provide examples of a function of a node. Figure 5E depicts an example of a main computation function, used as a generic decision making body. Figure 5F shows how the decision tree can be configured when a user changes one or more printing language settings.

## Claims

1. A method (200) for automatic printing language sensing, comprising:
storing a table defining a set of predetermined printing symbols corresponding to a plurality of printing languages, wherein the definition for each predetermined printing symbol comprises a decision tree data structure used for language sensing and having plurality of nodes, and wherein each node is either a decision function or a null value;
receiving (202) a data sample having a plurality of printing symbols corresponding to a syntax pattern specific for a printing language;
detecting a printing language of the data sample by:
identifying (204) a first printing symbol of the plurality of printing symbols from the data sample, and detecting a correspondence between the first printing symbol of the plurality of printing symbols and a first predetermined printing symbol of the set of predetermined printing symbols defined in the table;
responsive to detecting the correspondence between the first printing symbol of the plurality of printing symbols and the first predetermined printing symbol, applying a decision tree algorithm based on the decision tree data structure defined for the first predetermined printing symbol to detect a printing language of the data sample; and
repeating (206) the identification, the detection and the application with a second printing symbol of the plurality of printing symbols in the data sample and a second predetermined printing symbol of the set of predetermined printing symbols defined in the table.

2. The method (200) according to claim 1, further including detecting an end of the data sample.

3. The method (200) according to claim 2, further including restarting the language sensing after the end of the data sample is reached.

4. The method (200) according to claim 1, further including restarting the language sensing when a predetermined timeout threshold is reached.

5. The method (200) according to claim 1, further including restarting the language sensing when an error is detected.

6. The method (200) according to claim 1, further including storing a selection of the predetermined syntax patterns in an external database.

7. The method (200) according to claim 1, further including storing a selection of the predetermined syntax patterns in a memory of a device configured for automatic language sensing.

8. The method (200) of claim 1, wherein identifying the first combination of the plurality of printing symbols include searching for a printing command.

9. The method (200) of claim 1, further comprising storing a selection of predetermined syntax pattern in an external database for automatic language sensing.

## Patentansprüche

1. Verfahren (200) zur automatischen Druckersprachenerkennung, umfassend:
Speichern einer Tabelle, die einen Satz vorbestimmter Druckersymbole entsprechend einer Vielzahl von Druckersprachen definiert, wobei die Definition für jedes vorbestimmte Druckersymbol eine Entscheidungsbaum-Datenstruktur umfasst, die zur Sprachenerfassung verwendet wird und eine Vielzahl von Knoten aufweist, und wobei jeder Knoten entweder eine Entscheidungsfunktion oder ein Nullwert ist;
Empfangen (202) einer Datenprobe, die eine Vielzahl von Druckersymbolen aufweist, die einem für eine Druckersprache spezifischen Syntaxmuster entsprechen;
Erkennen einer Druckersprache der Datenprobe durch:
Identifizieren (204) eines ersten Druckersymbols der Vielzahl von Druckersymbolen aus der Datenprobe und Erkennen einer Entsprechung zwischen dem ersten Druckersymbol der Vielzahl von Druckersymbolen und einem ersten vorbestimmten Druckersymbol des Satzes von vorbestimmten Druckersymbolen, die in der Tabelle definiert sind;
als Reaktion auf das Erkennen der Entsprechung zwischen dem ersten Druckersymbol der Vielzahl von Druckersymbolen und dem ersten vorbestimmten Druckersymbol Anwenden eines Entscheidungsbaum-Algorithmus basierend auf der Entscheidungsbaum-Datenstruktur, die für das erste vorbestimmte Druckersymbol definiert ist, um eine Druckersprache der Datenprobe zu erkennen; und
Wiederholen (206) der Identifizierung, der Erkennung und der Anwendung mit einem zweiten Druckersymbol der Vielzahl von Druckersymbolen in der Datenprobe und einem zweiten vorbestimmten Druckersymbol des Satzes von vorbestimmten Druckersymbolen, die in der Tabelle definiert sind.

2. Verfahren (200) nach Anspruch 1, das ferner das Erkennen eines Endes der Datenprobe einschließt.

3. Verfahren (200) nach Anspruch 2, das ferner das erneute Starten der Sprachenerfassung einschließt, nachdem das Ende der Datenprobe erreicht ist.

4. Verfahren (200) nach Anspruch 1, das ferner das erneute Starten der Sprachenerfassung einschließt, wenn ein vorbestimmter Zeitüberschreitungsschwellenwert erreicht ist.

5. Verfahren (200) nach Anspruch 1, das ferner das erneute Starten der Sprachenerfassung einschließt, wenn ein Fehler erkannt wird.

6. Verfahren (200) nach Anspruch 1, das ferner das Speichern einer Auswahl der vorbestimmten Syntaxmuster in einer externen Datenbank einschließt.

7. Verfahren (200) nach Anspruch 1, das ferner das Speichern einer Auswahl der vorbestimmten Syntaxmuster in einem Speicher einer Vorrichtung einschließt, die für die automatische Sprachenerfassung konfiguriert ist.

8. Verfahren (200) nach Anspruch 1, wobei das Identifizieren der ersten Kombination der Vielzahl von Druckersymbolen das Suchen nach einem Druckbefehl einschließt.

9. Verfahren (200) nach Anspruch 1, das ferner das Speichern einer Auswahl eines vorbestimmten Syntaxmusters in einer externen Datenbank zur automatischen Sprachenerfassung einschließt.

## Revendications

1. Procédé (200) de détection automatique de langage d'impression, comprenant :
la mémorisation d'une table définissant un ensemble de symboles prédéterminés d'impression correspondant à une pluralité de langages d'impression, la définition de chaque symbole prédéterminé d'impression comprenant une structure de données d'arbre de décision utilisée pour la détection de langages et comptant une pluralité de nœuds et chaque nœud étant soit une fonction de décision soit une valeur nulle ;
la réception (202) d'un échantillon de données dont une pluralité de symboles d'impression correspondent à un modèle de syntaxe propre à un langage d'impression ;
la détection d'un langage d'impression de l'échantillon de données :
par identification (204) d'un premier symbole d'impression de la pluralité de symboles d'impression à partir de l'échantillon de données et par détection d'une correspondance entre le premier symbole d'impression de la pluralité de symboles d'impression et un premier symbole prédéterminé d'impression de l'ensemble de symboles prédéterminés d'impression défini dans la table ;
en réponse à la détection de la correspondance entre le premier symbole d'impression de la pluralité de symboles d'impression et le premier symbole prédéterminé d'impression, par application d'un algorithme d'arbre de décision basé sur la structure de données d'arbre de décision définie pour le premier symbole prédéterminé d'impression, afin de détecter un langage d'impression de l'échantillon de données ; et
par répétition (206) de l'identification, de la détection et de l'application, tandis qu'un second symbole d'impression de la pluralité de symboles d'impression se trouve dans l'échantillon de données et qu'un second symbole prédéterminé d'impression de l'ensemble de symboles prédéterminés d'impression est défini dans la table.

2. Procédé (200) selon la revendication 1, comprenant en outre la détection d'une fin de l'échantillon de données.

3. Procédé (200) selon la revendication 2, comprenant en outre le redémarrage de la détection de langages une fois que la fin de l'échantillon de données est atteinte.

4. Procédé (200) selon la revendication 1, comprenant en outre le redémarrage de la détection de langages lorsqu'un seuil prédéterminé de temporisation est atteint.

5. Procédé (200) selon la revendication 1, comprenant en outre le redémarrage de la détection de langages lorsqu'une erreur est détectée.

6. Procédé (200) selon la revendication 1, comprenant en outre la mémorisation d'une sélection des modèles prédéterminés de syntaxe dans une base de données externe.

7. Procédé (200) selon la revendication 1, comprenant en outre la mémorisation d'une sélection des modèles prédéterminés de syntaxe dans une mémoire d'un dispositif configuré pour la détection automatique de langage.

8. Procédé (200) selon la revendication 1, dans lequel l'identification de la première combinaison de la pluralité de symboles d'impression comprend la recherche d'une commande d'impression.

9. Procédé (200) selon la revendication 1, comprenant en outre la mémorisation d'une sélection d'un modèle prédéterminé de syntaxe dans une base de données externe pour une détection automatique de langage.
